# EUROPÄISCHE PATENTANMELDUNG

(11) **EP 4 216 382 A1**
(43) Veröffentlichungstag der Anmeldung: **26.07.2023**
(21) Anmeldenummer: 23150458.0
(22) Anmeldetag: 05.01.2023
(51) Int. Cl.: H02B 1/32, F16B 2/24, F16B 5/02, F16B 5/06, F16B 21/07

(54) **ANORDNUNG MIT EINER TRAGSCHIENE UND DARAUF ANEINANDERGEREIHTEN GEHÄUSEN**

(30) Priorität: 25.01.2022 DE 102022101707
(71) Anmelder: Weidmüller Interface GmbH & Co. KG, 32758 Detmold (DE)
(72) Erfinder: DIEKMANN, Jörg, 33813 Oerlinghausen (DE)
(74) Vertreter: Specht, Peter

(57) **Zusammenfassung**

Eine Anordnung mit einer Tragschiene (2), auf der eine Mehrzahl von aneinanderreihbaren Gehäusen, die mit elektrischen Kontakt- und/oder Funktionselementen (1) versehen sind, anordbar sind, wobei die Tragschiene (2) auf eine Montagebasis (3) in einer Montageposition montierbar ist, und insbesondere auf der Montagebasis (3) auch in einem Zustand montierbar ist, wenn die Gehäuse vor der Montage der Tragschiene (2) bereits auf die Tragschiene (2) aufgereiht worden sind, wobei die Tragschiene (2) durch zwei oder mehr Rastmittel (5), die vor der Montage der Tragschiene (5) an die Montagebasis (3) angesetzt sind und die Rastmittel (5) und die Tragschiene (2) korrespondierend derart ausgestaltet sind, dass die Tragschiene (2a, 2b) werkzeuglos auf die Rastmittel (5) aufsetzbar und an diesen arretierbar ist, zeichnet sich dadurch aus, dass das Rastmittel (5) einen Basisabschnitt (51) aufweist, wobei der Basisabschnitt (51) relativ zur Montageposition auf der Montagebasis (3) einen Querschnitt aufweist, der einem um 180° gedrehten U entspricht, wobei sich der Basisabschnitt (51) in einen horizontalen Basissteg (511) sowie zwei dazu senkrechten Seitenstege (512, 513) aufgliedert und sich das Rastelement (5) über die beiden Seitenstege (512, 513) auf der Montagebasis (3) als Widerlager abstützt.

## Beschreibung

Die Erfindung betrifft eine Anordnung mit einer Tragschiene, auf der eine Mehrzahl von aneinander reihbaren Gehäusen, die mit elektrischen Kontakt- und/oder Funktionselementen versehbar sind oder bereits versehen sind, anordbar ist, wobei die Tragschiene auf der Montagebasis auch in einem Zustand montierbar ist, wenn die Gehäuse vor der Montage der Tragschiene bereits auf die Tragschiene aufgereiht worden sind, und wobei die Tragschiene durch wenigstens ein Rastelement, das vor der Montage der Tragschiene an die Montagebasis angesetzt ist, an der Montagebasis befestigt ist.

Im Schaltschrankbau besteht die Notwendigkeit, Gehäuse von elektrischen Kontakt- und Funktionselementen (d.h. Gehäuse, die mit elektrischen Kontakt- und/oder Funktionselementen versehbar sind oder bereits versehen sind), auf Tragschienen in einer vorher definierten Menge und Reihenfolge aneinanderzureihen und - beispielsweise rastend - auf der Tragschiene zu fixieren. Die Tragschiene kann beispielsweise eine hutartige Querschnittsgeometrie aufweisen, sie kann aber auch einen anderen, beispielsweise einen C-förmigen Querschnitt, aufweisen. Das Aneinanderreihen bzw. Bestücken und das anschließende Fixieren jedes einzelnen Gehäuses der Kontakt- und Funktionselemente erfolgen üblicherweise auf einer bereits in den Schaltschrank eingesetzten und dort z.B. an einer Montagebasis fixierten Tragschiene. Problematisch ist, dass das sequezielle Bestücken einer Tragschiene im Schaltschrank u. a. längere Durchlaufzeiten bedeutet und ineffizient ist gegenüber den diversen Vorteilen einer parallelisierten Montage von vorbestückten Tragschienen.

Aus der DE 20 2017 106 653 U1 ist eine Anordnung mit einer Tragschiene bekannt, auf der eine Mehrzahl von aneinander reihbaren Gehäusen anordbar ist. Die Befestigung der Tragschiene auf einer Montagebasis erfolgt durch Montagebolzen, auf die die Tragschiene werkzeuglos aufsetzbar und an diesen arretierbar ist. Dazu sind die Köpfe der Montagebolzen mit federnden Elementen ausgestattet, so dass jeweils eine Art Ringschnappverbindung entsteht. Diese Lösung hat sich in der Praxis bewährt, wünschenswert ist jedoch eine besonders robuste und auch im Dauergebrauch besonders sichere Ausführung des Rastmittels.

Die Erfindung hat die Aufgabe, dieses Problem zu lösen.

Die Erfindung löst diese Aufgabe durch den Gegenstand des Anspruchs 1.

Geschaffen wird derart eine Anordnung mit einer Tragschiene, auf der eine Mehrzahl von aneinander reihbaren Gehäusen, die mit elektrischen Kontakt- und/oder Funktionselementen versehen sind, anordbar sind, wobei die Tragschiene auf einer Montagebasis in einer Montageposition montierbar ist, und insbesondere auf der Montagebasis auch in einem Zustand montierbar ist, wenn die Gehäuse vor der Montage der Tragschiene bereits auf die Tragschiene aufgereiht worden sind, wobei die Tragschiene durch zwei oder mehr Rastmittel, die vor der Montage der Tragschiene an die Montagebasis angesetzt sind, an der Montagebasis gehalten ist, wobei die Rastmittel und die Tragschiene korrespondierend derart ausgestaltet sind, dass die Tragschiene werkzeuglos auf die Rastmittel aufsetzbar und an diesen arretierbar ist. Dabei ist ferner vorgesehen, dass das Rastmittel einen Basisabschnitt aufweist, wobei der Basisabschnitt einen Querschnitt aufweist, der einem um 180° gedrehten U entspricht, wobei sich der Basisabschnitt in einen horizontalen Basissteg sowie zwei dazu senkrechten Seitenstege aufgliedert und sich das Rastelement über die beiden Seitenstege auf der Montagebasis als Widerlager abstützt und wobei das Rastmittel einen oder mehrere Rastschenkel zum Festrasten der Tragschiene auf der Montagebasis aufweist.

Dadurch wird eine besonders robuste und auch nach längerem Gebrauch noch besonders gut fest sitzende Schnappverbindung geschaffen, die nach Art einer Schnapphaken-Rastverbindung ausgelegt ist.

Nach einer besonders bevorzugten Ausführungsvariante der Erfindung ist vorgesehen, dass einer oder beide der Seitenstege wenigstens an einer Seite des Basisabschnitts oder an beiden Seiten des Basisabschnittes zu dem oder den Rastschenkeln verlängert sind, die zur rastenden Auflage auf der von der Montagebasis abgewandten Seite der Tragschiene ausgelegt sind und dienen.

Dadurch wird ein konstruktiv einfaches, kompakt bauendes Rastmittel geschaffen, das auch im Einsatz einer Umgebung mit stärkeren Vibrationen einen sicheren Sitz der Tragschiene an der Monatgebasis gewährleitet.

Nach einer weiteren vorteilhaften Option der Erfindung ist vorgesehen, dass die Rastschenkel jeweils an ihrer in der Montageposition zur Montagebasis weisenden Seite freigeschnitten sind, bzw. einen Freischnitt derart aufweisen, dass sie im montierten Zustand des Rastmittels - vor der Montage der Tragschiene auf der Montagebasis - nicht auf der Montagebasis aufliegen, sondern eine Schwenkbewegung um eine zur Montagebasis im Wesentlichen vertikale Schwenkachse im Rahmen ihrer elastischen Verformbarkeit ausführen können. Dabei federt jeder Rastschenkel in einer Kombination aus überwiegend Biegung und etwas Torsion aufgrund des aussermittigen Kraftangriffs gerade zu Beginn des Federweges. Dadurch wird durch eine einfache konstruktive Maßnahme, die fertigungstechnisch einfach umsetzbar ist, ein kompakt bauendes und robustes Rastmittel geschaffen.

Das Rastmittel ist vorzugsweise derart ausgebildet, dass seine Rastschenkel im montierten Zustand auf der Tragschiene angeordnete Gehäuse nicht berühren.

In einer weiteren bevorzugten Ausführungsart der Erfindung ist vorgesehen, dass ein Freischnitt des jeweiligen Rastschenkels einen parallel zum Basissteg verlaufenden Parallelabschnitt sowie einen Winkelabschnitt aufweist. Dadurch wird durch eine einfache konstruktive Maßnahme ein robuster Toleranzausgleich am Rastmittel geschaffen.

Nach einer weiteren besonders bevorzugten Ausführungsvariante der Erfindung ist vorgesehen, dass der jeweilige winkelige Abschnitt im montierten Zustand der Tragschiene auf den Grundschenkel der Tragschiene aufschnäbelt und zumindest abschnittsweise auf dem Grundschenkel aufliegt. Dadurch wird ein guter Sitze des Rastmittels gewährleistet.

Ferner ist nach einer weiteren besonders bevorzugten Ausführungsvariante der Erfindung vorgesehen, dass die Rastschenkel jeweils an ihrem freien Ende eine Einführschräge aufweisen und die jeweilige Einführschräge eine Abrundung aufweist. Dadurch wird durch eine einfache konstruktive Maßnahme eine nochmals einfachere Montage der Tragschiene gewährleistet.

Weiterhin ist nach einer weiteren besonders bevorzugten Ausgestaltung der Erfindung vorgesehen, dass die jeweilige Einführschräge durch eine raumdiagonale Biegung des jeweiligen Rastschenkels realisiert ist, wobei durch die Biegung sowohl der jeweilige Rastschenkel leicht nach innen gestellt ist, als auch die jeweilige Einführschräge in Bezug auf den U-förmigen Querschnitt jeweils nach außen gestellt ist. Dadurch wird durch eine fertigungstechnisch einfach herzustellendes konstruktives Element die einfache Montage der Tragschiene erreicht.

In einer weiteren bevorzugten Ausführungsart der Erfindung ist vorgesehen, dass sich im montierten Zustand der Tragschiene eine federnde Wirkung des jeweiligen Rastschenkels gegen eine Wandung der Längsseiten des jeweiligen Langlochs in der Tragschiene ergibt. Dadurch wird ein robustes Rastmittel mit (spielfreiem Sitz und) dauerhaft sicherer Funktion geschaffen.

Nach einer weiteren vorteilhaften Option der Erfindung ist vorgesehen, dass das Rastmittel im verrasteten Zustand mit dem jeweiligen Langloch zusammen wirkt, wobei das Langloch in Bezug auf das Rastmittel, insbesondere auf die Rastschenkel als Gegenrastmittel wirkt. Dadurch wird ein kompakt bauendes und robustes Rastmittel geschaffen.

Nach einer weiteren besonders bevorzugten Ausführungsvariante der Erfindung ist vorgesehen, dass der Basisabschnitt eine Bohrung aufweist, über die das Rastmittel mit einem Befestigungsmittel wie einer Schraube an der Montagebasis befestigt ist. Dadurch kann das Rastmittel besonders fest sitzend auf der Montagebasis befestigt werden.

In einer weiteren bevorzugten Ausführungsart der Erfindung ist vorgesehen, dass das Rastmittel eine bündige Anlage der Tragschiene an die Montagebasis ermöglicht. Dadurch wird eine bauraumsparendes Rastmittel und eine bauraumsparende Anordnung von Gehäusen auf der Tragschiene geschaffen.

In einer weiteren bevorzugten Ausführungsart der Erfindung ist vorgesehen, dass das Rastmittel auf der gegenüberliegenden Seite der Rastschenkel einen Arretierabschnitt aufweist, wobei der Arretierabschnitt derart gestaltet ist, dass er im montierten Zustand des Rastmittels in eine dazu vorgesehene Bohrung eingreift, die in die Montagebasis eingebracht ist. Dadurch wird durch eine einfache konstruktive Maßnahme ein einfach montierbares Rastmittel geschaffen, das während der Montage durch den Arretierabschnitt verdrehgesichert ist.

Nach einer weiteren vorteilhaften Option der Erfindung ist vorgesehen, dass die Bohrung derart zu einer Gewindebohrung in der Montagebasis positioniert ist, dass das Rastmittel nach seiner Montage auf der Montagebasis fluchtend zu den Langlöchern in der Tragschiene ausgerichtet ist. Dadurch wird eine Voraussetzung für eine einfache und schnelle Montage der Tragschiene geschaffen, da ein Ausrichten des jeweiligen Rastmittels zu einem anderen Rastmittel entfällt. Die Genauigkeit der Lage der Rastmittel ist durch die Genauigkeit der Lage der Bohrungen vorgegeben, wobei die Genauigkeit der Lage der Bohrungen von der Präzision der Fertigung der Montagebasis anhängig ist, die üblicherweise sehr hoch ist, wenn die Fertigung der Montagebasis auf Werkzeugmaschinen, wie z.B. Laserstrahlschneidanlagen erfolgt.

Ferner ist nach einer weiteren besonders bevorzugten Ausführungsvariante der Erfindung vorgesehen, dass das Rastmittel vorzugsweise aus einem metallischen Werkstoff, insbesondere Stahl einstückig als Stanz-Biegeteil aus einem Flachmaterial, vorzugsweise Band oder Blech hergestellt ist. Dadurch ergibt sich ein dauerhaft robustes und mit Mitteln der Massenfertigung einfach und kostengünstig zu produzierendes Rastmittel.

Weitere vorteilhafte Ausgestaltungen des erfindungsgemäßen Gegenstands sind den Unteransprüchen zu entnehmen.

Geschaffen wird ferner auch ein Rastmittel für eine Anordnung nach einem der auf die Anordnung bezogenen Ansprüche, mit einem oder mehreren der in diesen Ansprüchen auf das Rastmittel bezogenen Merkmalen.

Dabei kann insbesondere vorteilhaft vorgesehen sein, dass das Rastmittel einen Basisabschnitt aufweist, wobei der Basisabschnitt einen Querschnitt aufweist, der einem um 180° gedrehten U entspricht, wobei sich der Basisabschnitt in einen horizontalen Basissteg sowie zwei dazu senkrechten Seitenstege aufgliedert und wobei das Rastelement einen oder mehrere Rastschenkel zum Festrasten der Tragschiene auf der Montagebasis aufweist.

Nachfolgend wird die Erfindung anhand von Ausführungsbeispielen unter Bezug auf die Zeichnung näher beschrieben, wobei auch weitere vorteilhafte Varianten und Ausgestaltungen diskutiert werden. Es sei betont, dass das nachfolgend diskutierte Ausführungsbeispiel die Erfindung nicht abschließend beschreiben soll, sondern dass auch nicht dargestellte Varianten und Äquivalente realisierbar sind und unter die Ansprüche fallen. Es zeigt:
- Figur 1:: eine räumliche Ansicht von aneinandergereihten elektrischen Kontakt- und Funktionselementen auf einer Tragschiene, die auf eine Montagebasis montiert ist - die Tragschiene schwebt dabei über der Montagebasis, um die Rastmittel sichtbar zu machen;
- Figur 2:: in a) eine Vorderansicht einer ersten Ausgestaltungsvariante eines Rastmittels, in b) eine Seitenansicht des Rastmittels aus Fig. 2a, in c) eine Draufsicht des Rastmittels aus Fig. 2a, in d) eine räumliche Ansicht des Rastmittels aus Fig. 2a;
- Figur 3:: in a) eine Vorderansicht einer zweiten Ausgestaltungsvariante eines Rastmittels, in b) eine Seitenansicht des Rastmittels aus Fig. 2a, in c) eine räumliche Ansicht des Rastmittels aus Fig. 2a;
- Figur 4:: in a) bis d) jeweils eine Explosionsdarstellung eines Verfahrensschritts einer Montage der Tragschiene auf einer Montagebasis;
- Figur 5:: in a) eine Vorderansicht im Schnitt mit dem auf der Montagebasis montierten Rastmittel nach Fig. 2a bis Fig. 2d und aufgerasteter Tragschiene, in b) eine Seitenansicht im Schnitt zu Fig. 5a;
- Figur 6:: in a) eine Vorderansicht im Schnitt eines auf der Montagebasis montierten Rastmittels nach Fig. 2a bis Fig. 2d und aufgerasteter Tragschiene, in b) eine Seitenansicht im Schnitt zu Fig. 5b.

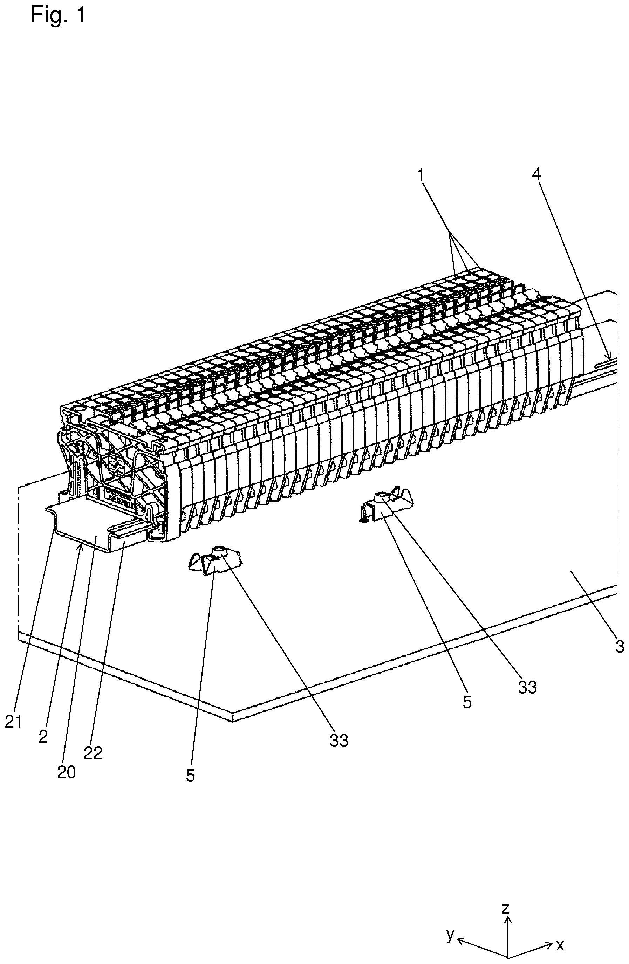

In Fig. 1 ist gezeigt, dass eine Mehrzahl aneinandergereihter Gehäuse mit elektrischen Kontakt- und Funktionselementen 1 auf einer Tragschiene 2 festlegbar ist bzw. festgelegt ist, die auf eine Montagebasis 3 montiert wird, die z.B. die Montagebasis 3 eines Schaltschrankes (hier nicht dargestellt) sein kann.

Unter dem Begriff "Gehäuse mit elektrischen Kontakt- und Funktionselementen" sind im Rahmen dieser Schrift Reihenklemmen, deren Gehäuse mit einem oder mehreren passiven (dazu gehören auch Leiter und Stromschienen) und/oder aktiven Bauelementen bestückt sind, aber auch mit Bauelementen bestückbare Elektronikgehäuse zu verstehen.

Die Tragschiene 2 kann - wie hier dargestellt - beispielsweise eine hutartige Querschnittsgeometrie aufweisen, sie kann aber auch einen anderen, beispielsweise einen C-förmigen Querschnitt, aufweisen.

Es kann vorzugsweise vorgesehen sein, dass in einem ersten Montageschritt 100 die auf der Tragschiene 2 (nach einem Verdrahtungs-/Schaltplan unterzubringenden) - Gehäuse 1 mit Kontakt- und Funktionselementen in einer definierten Anzahl und Reihenfolge auf der Tragschiene 2 aneinandergereiht montiert werden. Dazu werden beispielsweise Rastfüße der Gehäuse 1 auf die Tragschiene 2 aufgerastet.

In der Regel dienen Ränder 21, 22 der Tragschiene 2 - hier sind diese L-förmig gestaltet - dieser Vormontage der Gehäuse 1 und der Tragschiene 2 zu einer vormontierten Einheit. Zwischen diesen Rändern 21, 22 erstreckt sich ein Grundschenkel 20. Die Haupterstreckungsrichtung der Tragschiene 2 und dieses Grundschenkels 20 wird in den Fig. mit "x" bezeichnet. Das Aufrasten der Gehäuse 1 erfolgt im Wesentlichen senkrecht zur Tragschiene 2 und zur Montagebasis 3 - insbesondere einer ebenen Montageplatte - von oben in z-Richtung. Der Grundschenkel 20 erstreckt sich flächig in der x-y-Ebene.

Die Tragschiene 2 weist insbesondere im Grundschenkel eine Mehrzahl (vorzugsweise mindestens zwei oder mehr) an Langlöchern 4 oder schlitzartigen Durchbrüchen (in dieser Schrift nachfolgend ebenfalls als Langlöcher bezeichnet) auf. Bei einem Langloch 4 können die schmalen Seiten durch Halbkreise abgeschlossen sein, deren Durchmesser der Breite des Langlochs 4 entsprechen. Die Längsseiten des Langloches 4 verlaufen vorzugsweise parallel zueinander. Bei einem schlitzartigen Durchbruch - die hier auch als Langloch bezeichnet wird - sind die schmalen Seiten nicht durch Halbkreise, sondern vorzugsweise durch rechtwinkelig zu den Längsseiten verlaufende, gerade Seiten abgeschlossen. Die Langlöcher 4 sind vorzugsweise in dem Grundschenkel 20 der Tragschiene 2 ausgebildet und können eine definierte bzw. konstante Länge und Breite aufweisen.

Die Langlöcher 4 können dabei in einem definierten Muster angeordnet sein. Ein besonders bevorzugtes Muster kann ein Anordnen auf einer gedachten Geraden mit gleichmäßigen Abständen zwischen jeweils zwei Langlöchern 4 beinhalten. Dieses Muster kann optional jeweils einen von diesem Abstand verschiedenen Abstand von einem jeweils freien Ende der Tragschiene 2 zum jeweils ersten Langloch 4 aufweisen. Die beiden Abstände vom jeweiligen freien Ende zum jeweils ersten Langloch 4 können gleich groß sein.

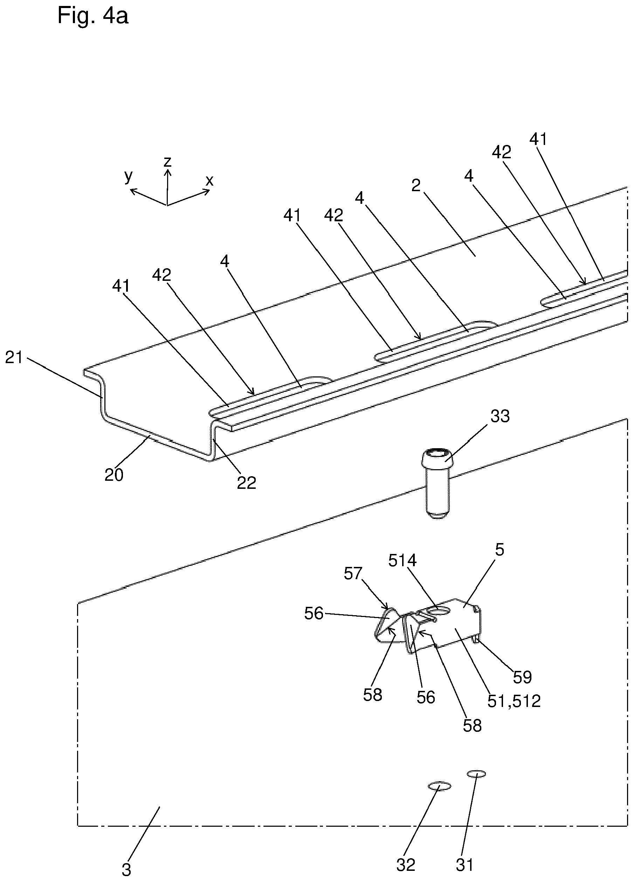

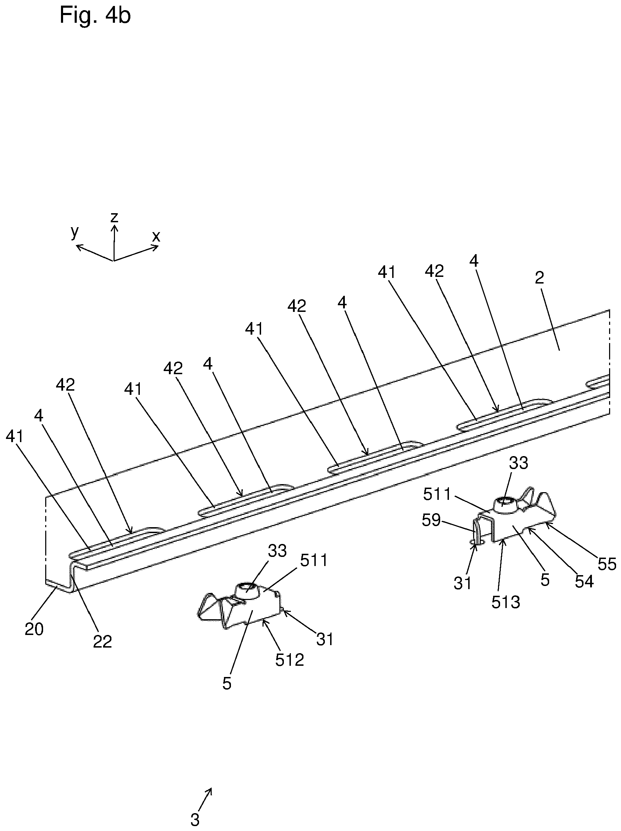

In einem zweiten, zeitlich beispielsweise folgenden oder ggf. auch vorher ausführbaren Montageschritt 200 werden Rastelemente 5 auf der Montagebasis 3 befestigt (siehe zum Verständnis z.B. Fig. 4a und Fig. 4b), beispielsweise mit Schrauben 33 (siehe Fig. 4a, 4b) in dafür vorgesehenen Gewindebohrungen 32 in die Montagebasis 3 festgeschraubt. Die Gewindebohrungen 32 der Montagebasis 3 korrespondieren vorzugsweise hinsichtlich des Musters ihrer Anordnung mit dem Muster der Anordnung der Langlöcher 4 in der Tragschiene 2.

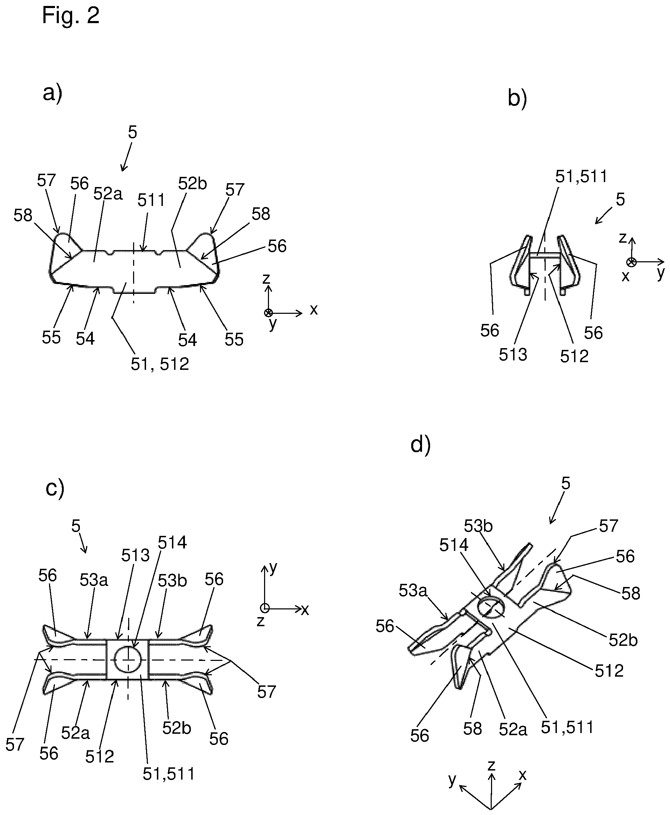

In den Figuren 2a bis 2d ist eine erste bevorzugte Ausgestaltung des Rastelements 5 dargestellt. Richtungsangaben orientieren sich im Folgenden auch an dem in Fig. 2a bis Fig. 2d zugeordnetem Koordinatensystem.

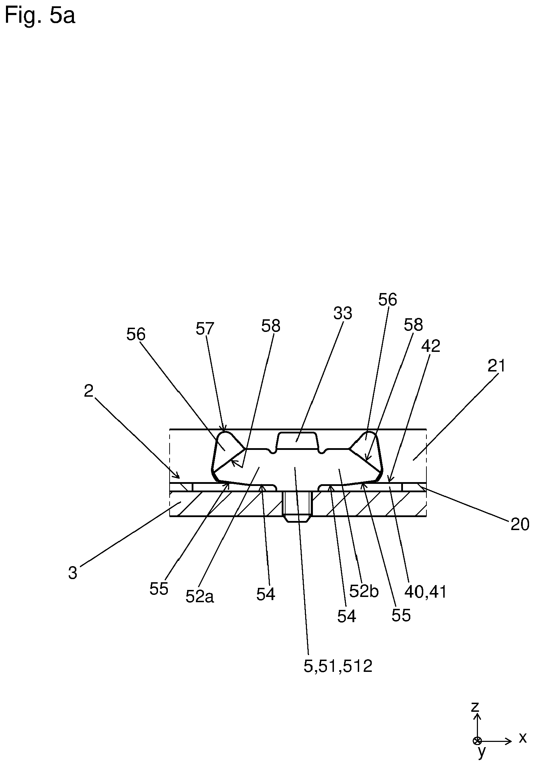

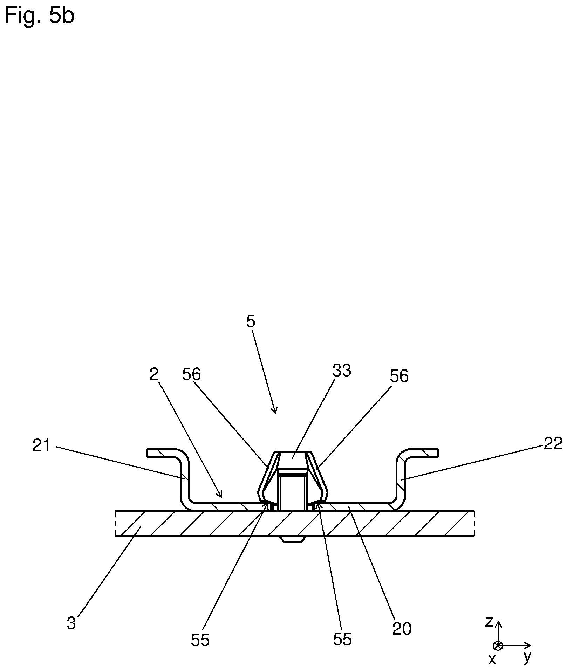

Das Rastmittel 5 weist einen Basisabschnitt 51 auf. Der Basisabschnitt 51 kann einen Querschnitt aufweisen, der relativ zur Montageposition auf der Montagebasis 3 einem um 180° gedrehten U entspricht. Der Basisabschnitt gliedert sich dementsprechend in einen Basissteg 511 sowie zwei Seitenstege 512, 513 auf. Der Basissteg 511 erstreckt sich in einer horizontalen Ebene, die parallel zu einer Ebene liegt, die von der x-Achse und y-Achse aufgespannt wird. Die beiden Seitenstege 512, 513 erstrecken sich beabstandet voneinander jeweils in zueinander parallelen Ebenen, die jeweils parallel zu einer Ebene liegen, die von der x-Achse und von der z-Achse aufgespannt wird. Über die beiden Seitenstege 512, 513 stützt sich das Rastelement 5 auf der Montagebasis 3 als Widerlager ab (siehe Fig. 5a bis Fig. 6b).

Der Basisabschnitt 51 kann eine Bohrung 514 aufweisen, über die das Rastmittel 5 z.B. mit einer Schraube 33 (hier nicht dargestellt, siehe z.B. Fig. 4a und Fig. 4b) an der Montagebasis 3 befestigt werden kann. Das Rastmittel 5 nach der ersten Ausgestaltungsvariante ist vorzugsweise jeweils symmetrisch zu zwei senkrecht zueinander stehenden Symmetrielinien ausgeführt, die sich in der Bohrung 514 kreuzen und die parallel zur x-Achse bzw. zur y-Achse verlaufen.

Die Seitenstege 512, 513 sind hier jeweils zu beiden Seiten des Basisabschnitts 51 - also jeweils in negativer und positiver x-Richtung zu Rastschenkel 52a, b und 53 a, b verlängert. Dabei sind die Rastschenkel 52a, b, 53a, b an ihren zur Montagebasis 3 weisenden Seite jeweils freigeschnitten, so dass sie im montierten Zustand des Rastmittels 5 nicht auf der Montagebasis 3 aufliegen, sondern eine Schwenkbewegung um eine im wesentlichen vertikale oder genau vertikale Schwenkachse - also genau oder im Wesentlichen parallel zur z-Achse- im Rahmen ihrer elastischen Verformbarkeit ausführen können. Ein Freischnitt des jeweiligen Rastschenkels 52a, b, 53a, b weist einen parallel zum Basissteg 511 verlaufenden Parallelabschnitt 54 sowie einen dazu winkeligen in einem Winkel größer 10° verlaufenden Winkelabschnitt 55 auf, wie dies gut erkennbar in Fig. 2a dargestellt ist.

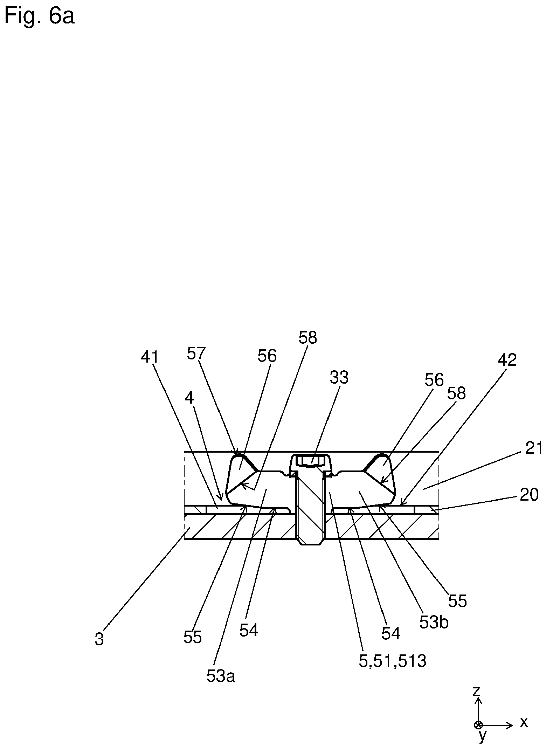

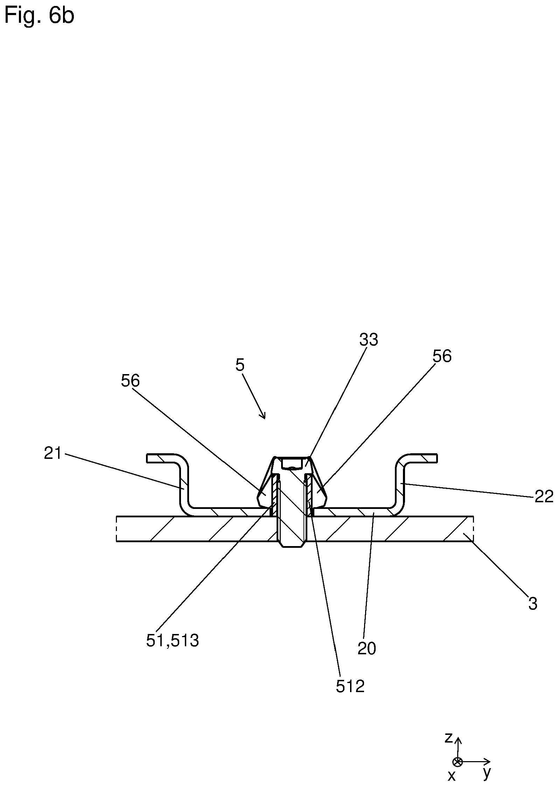

Der jeweilige Winkelabschnitt 55 liegt im montierten Zustand der Tragschiene 2 gespannt auf den Grundschenkel 20 der Tragschiene 2 auf und liegt dementsprechend zumindest abschnittsweise auf dem Grundschenkel 20 auf, wie dies in den Figuren 5a und 6a dargestellt ist.

Die Rastschenkel 52a, b, 53a, können jeweils an ihrem freien Ende eine Einführschräge 56 aufweisen. Die jeweilige Einführschräge 56 weist eine Abrundung 57 auf. Die jeweilige Einführschräge 56 ist durch eine raumdiagonale Biegung 58 des jeweiligen Rastschenkels 52a, b, 53a, b realisiert. Durch die Biegung 58 wird sowohl der jeweilige Rastschenkel 52a, b, 53a, b leicht nach innen gestellt, als auch die jeweilige Einführschräge 56 in Bezug auf den U-förmigen Querschnitt jeweils nach außen gestellt, wie dies in Fig. 2c dargestellt ist.

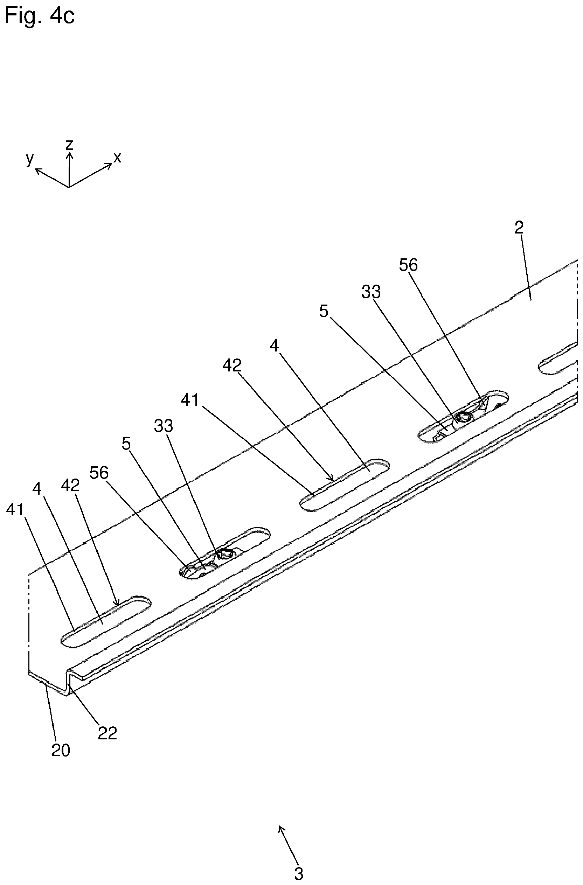

Dadurch ergibt sich im unmontierten Zustand der Tragschiene 2 jeweils eine wirksame Einführschräge für das jeweilige Langloch 4 sowie im montierten Zustand der Tragschiene 2 eine federnde Wirkung des jeweiligen Rastschenkels 52a, b, 53a, b gegen eine Wandung 41 der Längsseiten des jeweiligen Langlochs 4 in der Tragschiene 2. Siehe dazu auch Fig. 4c.

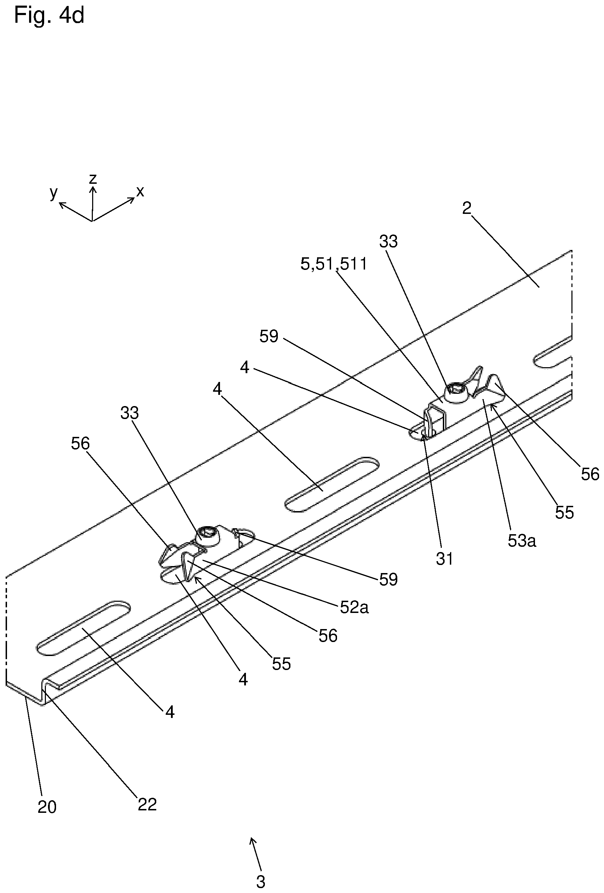

Das Rastmittel 5 wirkt im verrasteten Zustand mit der Tragschiene im Bereich des jeweiligen Langlochs 4 zusammen, dass an einem oder mehreren seiner Ränder(Längsseiten in Bezug auf das Rastmittel 5, insbesondere auf die Rastschenkel 52a, b, 53a, b als Gegenrastmittel wirkt. Die jeweiligen Rastschenkel 52a, b, 53a, b übergreifen durch den Freischnitt 54, 55 jeweils im verrasteten Zustand eine Oberkante 42 der Längsseiten des jeweiligen Langlochs zumindest teilweise, wie dies in den Figuren 4d, 5a und 6a gut erkennbar dargestellt ist und legen die Tragschiene rastend an der Montagebasis 3 fest.

Das Rastmittel 5 ist vorzugsweise aus einem metallischen Werkstoff, wie z.B. Stahl einstückig als Stanz-Biegeteil aus einem Flachmaterial, wie z.B. Band oder Blech, hergestellt. Es kann beispielsweise in einem in einem Folgeverbundwerkzeug hergestellt sein.

Dabei ermöglicht das Rastmittel 5 eine feste und vorzugsweise bündige Anlage der Tragschiene 2 an der Montagebasis 3. Dementsprechend wird ein robustes, einfach zu fertigendes und kostengünstiges Rastmittel 5 geschaffen.

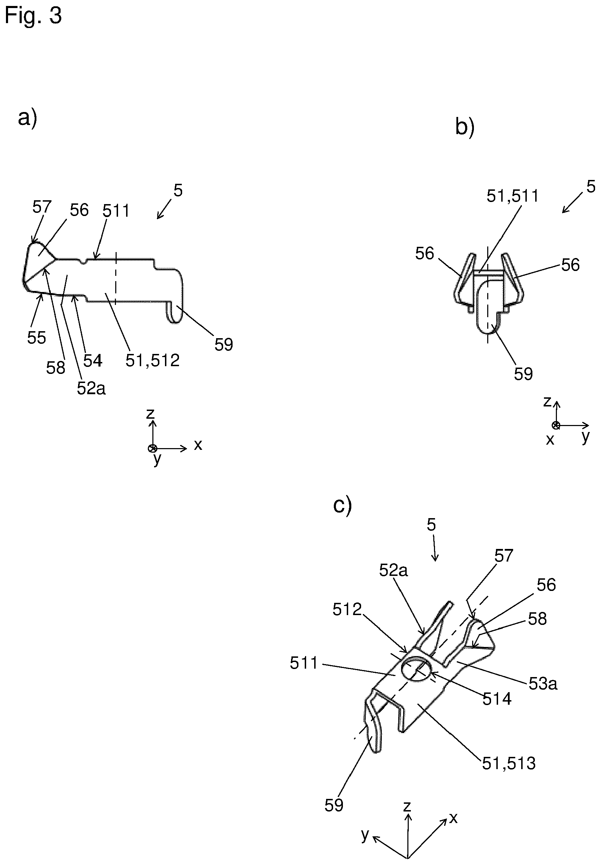

In den Figuren 1 sowie 3a bis 3c und 4a bis 4d ist ein Rastmittel 5 in einer zweiten bevorzugten Ausgestaltungsvariante dargestellt. Um im Folgenden Wiederholungen zu vermeiden, werden lediglich Änderungen und Ergänzungen zu dem Rastmittel 5 der ersten Ausführungsvariante nach Fig. 2a bis d sowie Fig. 5a bis 6b beschrieben.

Abweichend von der ersten Ausgestaltungsvariante des Rastmittels 5 nach Fig. 2a bis d sowie Fig. 5a bis 6b ist das Rastmittel 5 nach der zweiten Ausgestaltungsvariante im Wesentlichen symmetrisch zu einer Symmetrielinie, die parallel zur x-Achse verläuft, gestaltet.

Demnach weist das Rastmittel 5 nach der zweiten Ausgestaltungsvariante -neben dem Basisabschnitt 51- nur zwei Rastschenkel 52a, 53a und dementsprechend nur zwei Einführschrägen 56 auf. Die jeweilige Einführschräge 56 ist ebenfalls jeweils durch die raumdiagonale Biegung 58 erzeugt.

Die Seitenstege 512, 513 sind hier jeweils nur zu einer Seite des Basisabschnitts 51 -also jeweils in negativer oder positiver x-Richtung zu Rastschenkel 52a und 53a verlängert (siehe dazu z.B. Fig. 1). Auch hier sind die Rastschenkel 52a, 53a jeweils freigeschnitten, so dass sie im montierten Zustand des Rastmittels 5 nicht auf der Montagebasis 3 aufliegen, sondern eine Schwenkbewegung um eine in Wesentlichen vertikale Schwenkachse im Rahmen ihrer elastischen Verformbarkeit ausführen können. Ein Freischnitt des jeweiligen Rastschenkels 52a , 53a weist auch hier einen parallel zum Basissteg 511 verlaufenden Parallelabschnitt 54 sowie einen dazu winkeligen in einem Winkel größer 10° verlaufenden Winkelabschnitt 55 auf.

Der jeweilige Winkelabschnitt 55 liegt im montierten Zustand der Tragschiene 2 gespannt auf den Grundschenkel 20 der Tragschiene 2 auf und liegt dementsprechend zumindest abschnittsweise auf dem Grundschenkel 20 auf.

Auch das Rastmittel 5 nach der zweiten Ausgestaltungsvariante wirkt im verrasteten Zustand mit dem jeweiligen Langloch 4 zusammen, das in Bezug auf das Rastmittel 5, insbesondere auf die Rastschenkel 52a, 53a als Gegenrastmittel wirkt. Die jeweiligen Rastschenkel 52a, 53a übergreifen durch den Freischnitt 54, 55 jeweils im verrasteten Zustand eine Oberkante 42 der Längsseiten des jeweiligen Langlochs zumindest teilweise.

Das Rastmittel 5 nach der zweiten Ausgestaltungsvariante weist auf der gegenüberliegenden Seite der Rastschenkel 52a, 53a ferner einen Arretierabschnitt 59 auf. Der Arretierabschnitt 59 ist dazu vorgesehen, das Rastmittel 5 zusätzlich zur Verschraubung verdrehsicher an der Montagebasis 3 zu arretieren. Dazu ist der Arretierabschnitt 59 derart gestaltet, dass er im montierten Zustand des Rastmittels 5 in eine dazu vorgesehene Bohrung 31 eingreift, die in die Montagebasis 3 eingebracht ist. Siehe dazu Fig. 1, Fig. 4a, 4c. Der Begriff "Bohrung" ist nicht zu eng auszulegen. Insofern ist unter dem Begriff "Bohrung" hier auch eine kreisrunde Öffnung zu subsumieren, die nicht durch Bohren, sondern z.B. durch Lochen oder Laserstrahlschneiden hergestellt ist.

Die Bohrung 31 ist derart zu der Gewindebohrung 32 in der Montagebasis 3 positioniert, dass das Rastmittel 5 nach der zweiten Ausgestaltungsvariante nach seiner Montage auf der Montagebasis 3 fluchtend zu den Langlöchern 4 in der Tragschiene 2 ausgerichtet ist.

Dadurch wird ein verdrehsicheres Rastmittel 5 geschaffen, das sich auf Grund des Arretierabschnitts 59 besonders einfach montieren lässt und nach der Montage vorteilhaft nicht mehr zusätzlich parallel zu den Langlöchern 4 in der Tragschiene 2 ausgerichtet werden muss.

Wie in Fig. 1 und in Fig. 4b gut erkennbar dargestellt ist, sind die Rastelemente 5 der zweiten Ausgestaltungsvariante vorzugsweise paarweise jeweils mit dem Arretierabschnitt 59 zueinander weisend auf die Montagebasis 3 aufgesetzt und befestigt. Dabei alterniert die Lage der Bohrung 31, in die der Arretierabschnitt 59 eingreift, zur Lage der Gewindebohrung 32, so dass keine rechte und linke Ausführung des Rastmittels 5 nach der zweiten Ausgestaltungsvariante erforderlich ist. Derart wirken zwei der Rastmittel 5 nach der zweiten Ausgestaltungsvariante im Zusammenspiel hinsichtlich der Anzahl und Ausrichtung der Raststege 52a, b bzw. 53a, b wie ein Rastmittel 5 der ersten Ausgestaltungsvariante.

Die derart paarweise Anordnung von jeweils zwei Rastmitteln 5 nach der zweiten Ausgestaltungsvariante nach Fig. 1 sowie Fig. 4a bis Fig. 4d ist vorteilhaft, jedoch nicht zwingend. Das Rastmittel 5 nach der zweiten Ausgestaltungsvariante kann auch mit dem Arretierabschnitt 59 jeweils einheitlich in positiver oder negativer x-Richtung ausgerichtet angeordnet sein.

In einem weiteren Montageschritt 300 kann die im ersten Montageschritt 100 mit Kontakt- und Funktionselementen 1 bestückte Tragschiene 2 an den auf die Montagebasis 3 aufgebrachten Rastmitteln 5 arretiert werden (siehe dazu Fig. 1 sowie Fig. 4a bis Fig. 4d). Die Rastmittel 5 berühren die auf der Tragscheine ggf. bereits aufgerasteten Gehäuse vorzugsweise nicht.

In diesem Montageschritt 300 kann die im ersten Montageschritt 100 mit Kontakt- und Funktionselementen 1 bestückte Tragschiene 2 beispielsweise einfach senkrecht, d.h. in negativer z-Richtung über die jeweiligen Rastmittel 5 auf die Montagebasis 3 geschoben werden, so dass an dem jeweiligen Langloch 4 das jeweilige Rastmittel 5 werkzeuglos montiert bzw. verrastet wird. Das Rastmittel 5 kann insbesondere vorteilhaft nach dem Prinzip eines Schnapphakens ausgelegt sein und wirkt mit dem Basisschenkel 20 der Tragschiene 2 zusammen als Rastverbindung.

Es kann auch erst die Tragschiene 2 montiert werden und dann mit den Gehäusen bestückt werden. Beide Montageartien sind mit den vorgestellten Rastmitteln einfach realisierbar.

### Bezugszeichenliste

- 1: Kontakt- und Funktionselement
- 2: Tragschiene
- 20: Grundschenkel
- 21: Rand
- 22: Rand
- 3: Montagebasis
- 31: Bohrung
- 32: Gewindebohrung
- 33: Schraube
- 4: Langloch
- 41: Wandung
- 42: Oberkante
- 5: Rastmittel
- 51: Basisabschnitt
- 511: Basissteg
- 512: Seitensteg
- 513: Seitensteg
- 52a, b: Rastschenkel
- 53a, b: Rastschenkel
- 54: Parallelabschnitt
- 55: Winkelabschnitt
- 56: Einführschräge
- 57: Abrundung
- 58: raumdiagonale Biegung
- 59: Arretierabschnitt

## Patentansprüche

1. Anordnung mit einer Tragschiene (2), auf der eine Mehrzahl von aneinander reihbaren Gehäusen, die mit elektrischen Kontakt- und/oder Funktionselementen (1) versehen sind, anordbar sind, wobei die Tragschiene (2) auf eine Montagebasis (3) in einer Montageposition montierbar ist, und insbesondere auf der Montagebasis (3) auch in einem Zustand montierbar ist, wenn die Gehäuse vor der Montage der Tragschiene (2) bereits auf die Tragschiene (2) aufgereiht worden sind, wobei die Tragschiene (2) durch zwei oder mehr Rastmittel (5) gehalten ist, die vor der Montage der Tragschiene (5) an die Montagebasis (3) ansetzbar sind und angesetzt sind und wobei die Rastmittel (5) und die Tragschiene (2) korrespondierend derart ausgestaltet sind, dass die Tragschiene (2a, 2b) werkzeuglos auf die Rastmittel (5) aufsetzbar und an diesen arretierbar ist, wobei das jeweilige Rastmittel (5) einen Basisabschnitt (51) aufweist, wobei der Basisabschnitt (51) relativ zur Montageposition auf der Montagebasis (3) einen Querschnitt aufweist, der einem um 180° gedrehten U entspricht, wobei sich der Basisabschnitt (51) in einen horizontalen Basissteg (511) sowie zwei dazu senkrechten Seitenstege (512, 513) aufgliedert und wobei das Rastelement (5) über die beiden Seitenstege (512, 513) auf der Montagebasis (3) als Widerlager abstützt und wobei das Rastmittel (5) einen oder mehrere Rastschenkel (52a, b, 53 a, b) zum Festrasten der Tragschiene auf der Montagebasis (3) aufweist.

2. Anordnung nach Anspruch 1, **dadurch gekennzeichnet, dass** einer oder beide der Seitenstege (512, 513) wenigstens an einer Seite des Basisabschnitts (51) oder an beiden Seiten des Basisabschnittes zu dem oder den Rastschenkeln (52a, b, 53 a, b) verlängert sind, die zur Auflage auf der von der Montagebasis (3) abgewandten Seite der Tragschiene (2) ausgelegt sind und dienen.

3. Anordnung nach Anspruch 2, **dadurch gekennzeichnet, dass** die Rastschenkel (52a, b, 53a, b) auf ihrer zur Montagebasis (3) weisenden Seite jeweils einen Freischnitt aufweisen, so dass sie im montierten Zustand des Rastmittels (5) auf der Montagebasis (3) und vor dem Montieren der Tragschiene nicht auf der Montagebasis (3) aufliegen, sondern eine Schwenkbewegung um eine zur Montagebasis im Wesentlichen oder genau vertikale Schwenkachse ausführen können.

4. Anordnung nach einem der vorgenannten Ansprüche, **dadurch gekennzeichnet, dass** der jeweilige Freischnitt des jeweiligen Rastschenkels (52a, b, 53a, b) einen parallel zum Basissteg (511) verlaufenden Parallelabschnitt (54) sowie einen dazu winkeligen in einem Winkel größer 10° verlaufenden Winkelabschnitt (55) aufweist.

5. Anordnung nach Anspruch 4, **dadurch gekennzeichnet, dass** der jeweilige Winkelabschnitt (55) im montierten Zustand der Tragschiene (2) zumindest abschnittsweise auf dem Grundschenkel (20) aufliegt.

6. Anordnung nach einem der Ansprüche 2 bis 5, **dadurch gekennzeichnet, dass** die jeweiligen Rastschenkel (52a, b, 53a, b) jeweils an ihrem freien Ende eine Einführschräge (56) aufweisen.

7. Anordnung nach Anspruch 6, **dadurch gekennzeichnet, dass** die jeweilige Einführschräge (56) durch eine raumdiagonale Biegung (58) des jeweiligen Rastschenkels (52a, b, 53a, b) realisiert ist, wobei durch die Biegung (58) sowohl der jeweilige Rastschenkel (52a, b, 53a, b) leicht nach innen gestellt ist, als auch die jeweilige Einführschräge (56) in Bezug auf den U-förmigen Querschnitt jeweils nach außen gestellt ist.

8. Anordnung nach einem der vorgenannten Ansprüche, **dadurch gekennzeichnet, dass** sich im montierten Zustand der Tragschiene (2) eine federnde Wirkung des jeweiligen Rastschenkels (52a, b, 53a, b) gegen eine jeweilige Wandung (41) einer der Längsseiten des jeweiligen Langlochs (4) in der Tragschiene (2) ergibt.

9. Anordnung nach einem der vorgenannten Ansprüche, **dadurch gekennzeichnet, dass** das Rastmittel (5) im verrasteten Zustand mit dem jeweiligen Langloch (4) zusammen wirkt, wobei das Langloch (4) in Bezug auf das Rastmittel (5), insbesondere auf die Rastschenkel (52a, b, 53a, b) als Gegenrastmittel wirkt.

10. Anordnung nach einem der vorgenannten Ansprüche, **dadurch gekennzeichnet, dass** der Basisabschnitt (51) eine Bohrung (514) aufweist, über die das jeweilige Rastmittel (5) mit einem Befestigungsmittel, insbesondere mittels einer Schraube (33), an der Montagebasis (3) befestigt ist.

11. Anordnung nach einem der vorgenannten Ansprüche, **dadurch gekennzeichnet, dass** das Rastmittel (5) eine bündige Anlage der Tragschiene (2) an die Montagebasis (3) ermöglicht.

12. Anordnung nach einem der vorgenannten Ansprüche, **dadurch gekennzeichnet, dass** das Rastmittel (5) auf der gegenüberliegenden Seite der Rastschenkel (52a, 53a) einen Arretierabschnitt (59) aufweist, wobei der Arretierabschnitt (59) derart gestaltet ist, dass er im montierten Zustand des Rastmittels (5) in eine dazu vorgesehene Bohrung (31) eingreift, die in die Montagebasis (3) eingebracht ist.

13. Anordnung nach Anspruch 12, **dadurch gekennzeichnet, dass** die Bohrung (31) derart zu einer Gewindebohrung (32) in der Montagebasis (3) positioniert ist, dass das Rastmittel (5) nach seiner Montage auf der Montagebasis (3) fluchtend zu den Langlöchern (4) in der Tragschiene (2) ausgerichtet ist.

14. Anordnung nach einem der vorgenannten Ansprüche, **dadurch gekennzeichnet, dass** die Rastelemente (5) paarweise jeweils mit dem Arretierabschnitt (59) zueinander weisend auf die Montagebasis (3) aufgesetzt und befestigt sind.

15. Anordnung nach einem der vorgenannten Ansprüche, **dadurch gekennzeichnet, dass** das Rastmittel (5) vorzugsweise aus einem metallischen Werkstoff, insbesondere Stahl einstückig als Stanz-Biegeteil aus einem Flachmaterial, vorzugsweise Band oder Blech hergestellt ist.

16. Rastmittel (5) für eine Anordnung nach einem der vorstehenden Ansprüche, mit einem oder mehreren der in den vorstehenden Ansprüchen auf das Rastmittel (5) bezogenen Merkmalen.

17. Rastmittel nach Anspruch 16, **dadurch gekennzeichnet, dass** es einen Basisabschnitt (51) aufweist, wobei der Basisabschnitt (51) einen Querschnitt aufweist, der einem um 180° gedrehten U entspricht, wobei sich der Basisabschnitt (51) in einen horizontalen Basissteg (511) sowie zwei dazu senkrechten Seitenstege (512, 513) aufgliedert und wobei das Rastelement (5) einen oder mehrere Rastschenkel (52a, b, 53 a, b) zum Festrasten der Tragschiene auf der Montagebasis (3) aufweist.

18. Rastmittel nach Anspruch 17, **dadurch gekennzeichnet, dass** das Rastmittel (5) aus einem metallischen Werkstoff hergestellt ist.

19. Rastmittel nach Anspruch 17 oder 18, **dadurch gekennzeichnet, dass** das Rastmittel (5) einstückig als Stanz-Biegeteil aus einem Flachmaterial hergestellt ist.
